# EUROPÄISCHE PATENTSCHRIFT

(11) **EP 0 587 638 B1**
(45) Veröffentlichungstag und Bekanntmachung des Hinweises auf die Patenterteilung: **10.01.1996**
(21) Anmeldenummer: 92911084.9
(22) Anmeldetag: 30.05.1992
(51) Int. Cl.: H02J 7/10

(54) **VERFAHREN UND SCHALTUNGSANORDNUNG ZUM VORZUGSWEISEN SCHNELLEN LADEN VON WIEDERAUFLADBAREN BATTERIEN**
PROCESS AND DEVICE FOR PREFERABLY QUICKLY RECHARGING RECHARGEABLE BATTERIES
PROCEDE ET APPAREIL POUR RECHARGER, DE PREFERENCE RAPIDEMENT, DES BATTERIES RECHARGEABLES

(30) Priorität: 05.06.1991 AT 1134/91
(43) Veröffentlichungstag der Anmeldung: 23.03.1994
(73) Patentinhaber: ENSTORE FORSCHUNGS-, ENTWICKLUNGS- UND VERTRIEBSGES. M.B.H., A-8020 Graz (AT)
(72) Erfinder: AL-ABASSY, Issam, A-8010 Graz (AT)
(74) Vertreter: Riebling, Peter, Dr.-Ing., Patentanwalt
(86) Internationale Anmeldenummer: EP9201206
(87) Internationale Veröffentlichungsnummer: WO9222120

(56) Entgegenhaltungen:
- EP-A- 0 181 112
- EP-A- 0 290 396
- EP-A- 0 330 981
- EP-A- 0 385 145
- EP-A- 0 460 888
- WO-A-84/00614
- WO-A-87/05452
- WO-A-90/12441
- FR-A- 2 239 772
- FR-A- 2 274 156
- FR-A- 2 399 149
- US-A- 4 727 306

## Beschreibung

Die Erfindung bezieht sich auf ein Verfahren gemäss dem Oberbegriff des Patentanspruchs 1 und eine Schaltungsanordnung zur Durchführung des Verfahrens.

Bekannte Ladegeräte arbeiten häufig nach dem Prinzip, daß man entweder eine konstante Spannung oder einen konstanten Strom vorgibt und daß sich dann entsprechend der Ladestrom oder die Spannung an der Batterie einstellt. Beim sogenannten Konstantspannungsladen wird an die Batterie eine konstante Ladespannung gelegt,und der anfänglich meist sehr hohe Strom nimmt im Laufe der Ladezeit immer mehr ab. Damit am Ende der Ladezeit keine unzulässige Erwärmung der Batterie auftritt, wird der Ladestrom entsprechend begrenzt. Dies bedingt sehr lange Ladezeiten, um eine Batterie voll aufzuladen. Beim sogenannten Konstantstromladen wird in die Batterie mit einer entsprechend hohen Ladespannung ein konstanter Strom eingespeist. Beim Erreichen der maximalen Spannung an der Batterie wird der Ladestrom abgeschaltet. Diese maximale Spannung setzt sich aus der elektrochemischen Spannung (EMK) und der Abfallspannung am Innenwiderstand der Batterie zusammen; d.h. die Batterie ist noch nicht voll geladen, wenn abgeschaltet wird. Wird jedoch trotzdem weitergeladen, so erwärmt sich die Batterie und leidet darunter. Aus diesen Gründen ist bei den bekannten handelsüblichen Ladegeräten der Ladestrom auf etwa 2 Ampere begrenzt, was wiederum Ladezeiten zwischen 12 und 24 Stunden erfordert.

Es gibt aber auch sogenannte Schnelladegeräte, die Batterien in wesentlich kürzerer Zeit aufladen, z.B. in einer Stunde. Dabei wird von der Tatsache Gebrauch gemacht, daß eine vollständig entladene Batterie anfänglich einen relativ hohen Strom aufzunehmen in der Lage ist. Dies trifft insbesondere fUr NiCd-Batterien zu, die einen geringen Innenwiderstand aufweisen. Wird jedoch der hohe Ladestrom nicht rechtzeitig abgeschaltet, besteht die Gefahr, daß sich die Temperatur infolge überladung so stark erwärmt, daß eine Gasung eintritt, welche die Batterie zerstören kann, zumindest aber die Lebensdauer begrenzen kann.

Besonders bei Schnelladegeräten dieser Art stellt sich das Problem, den richtigen Abschaltzeitpunkt für den Ladestrom bzw. die Ladespannung zu finden, denn wird zu früh abgeschaltet, wird die gewünschte Ladekapazität wiederum nicht erreicht. Als Abschaltkriterien werden die Ladezeit, die Temperatur und die Klemmenspannung herangezogen. Am genauesten sind die Verfahren mit Messung der Klemmenspannung, insbesondere dann, wenn die Spannung im stromlosen Zustand der Batterie gemessen wird. Bei bekannten Ladegeräten wird dies dadurch realisiert, daß die Spannung während kurzer Ladepausen gemessen wird. Es ist weiter bekannt, den Ladestrom der Batterie in konstanten Stromimpulsen zuzuführen, wobei in den Stromimpulspausen die Klemmenspannung gemessen und Uberwacht wird.

Bei einem bekannten Verfahren dieser Art, DeltaV-Verfahren genannt, wird von der Eigenschaft Gebrauch gemacht, daß die Zellenspannung stark von der Temperatur der Batterie abhängt, und zwar derart, daß bei Temperaturanstieg die Zellenspannung abnimmt. Bei diesem bekannten Verfahren wird also bewußt eine erhebliche überladung in Kauf genommen, um kurze Ladezeiten und die erforderliche Temperaturerhöhung zu erhalten, damit der Spannungsabfall DeltaV erfaßt werden kann. Nachteilig hierbei ist jedoch, daß dieser Spannungsabfall früher einsetzt, wenn mit höheren Strömen und bei höheren Temperaturen der Batterie geladen wird. Diese wird in diesem Fall nicht voll geladen. Ferner wird durch die bei der Erhitzung auftretende Gasung die Lebensdauer der Batterie stark herabgesetzt.

Bei einem anderen bekannten Verfahren dieser Art wird der steile Spannungsanstieg am Ende der Ladung als Kriterium benutzt, wobei jedoch der Ladestrom nicht abgeschaltet, sondern kontinuierlich zurückgenommen wird. Damit wird eine Temperaturerhöhung gegen Ende des Ladevorgangs wirksam unterbunden. Auf diese Weise können Batterien schonend geladen werden, wodurch eine lange Lebensdauer und eine hohe Zyklenzahl gewährleistet sind. Die Mindestladedauer wird hierbei mit 10 Minuten bei einer Batterie von 1,2 Ah angegeben. Außerdem kann in einem Temperaturbereich von -10 bis +60 Grad C geladen werden.

Bei anderen bekannten Ladeverfahren wird zur Steuerung des Ladevorganges und als Abschaltkriterium die Änderung der Klemmspannung der Batterie innerhalb eines Ladestromimpulses verwendet. Bei einem Verfahren dieser Art (EP-A1-0 034 003) wird der Ladesstrom der Batterie in form von Stromimpulsen zugeführt, wobei in den Impulspausen eine Entladung der Batteie vorgenommen wird. Hierbei können die rechteckförmigen Stromimpulse Abschnitte kleiner und großer Stromstärken aufweisen. Bei diesem bekannten Verfahren wird die Änderung der Klemmenspannung der Batterie während des Ladens über eine vorgegebene Zeit während eines Teils eines Ladeimpulses gemessen, wobei der Ladevorgang abgebrochen wird, wenn ein Parameter der gemessenen Spannung eine vorgegebene Charakteristik überschreitet; beispielsweise die Spannungsänderung einen vorgegebenen Grenzwert überschreitet. Es wird also die Änderung der Betriebsspannung während einer Periode gemessen, die mit dem Einsetzen eines Ladeimpulses beginnt. Beispielsweise wird unmittelbar beim Einsetzen eines Ladeimpulses und zwei Sekunden später die Batteriespannung gemessen und die Spannungsdifferenz gebildet. Ist eine Batterie vollgeladen, dann ist diese spannungsdifferenz sehr groß. Trägt man die gemessenen Spannungsdifferenzwerte in einem Zeitdiagramm auf, dann erkennt man, daß die Steigung dieser sich ergebenden Kurve kurz vor Erreichen des vollen Ladezustandes einen Umkehrpunkt hat, was sich als Kriterium zum Abbrechen des Ladevorgangs anbietet.

Durch die DE-A1-3 811 371 ist ein Verfahren zum gleichzeitigen Laden und Prüfen des Zustandes einer NiCd-Batterie bekannt geworden, bei dem der Ladestrom der Batterie ebenfalls in Form von konstanten, genau definierten Stromimpulsen zugeführt werden muß, wobei die rechteckförmigen Stromimpulse Abschnitte kleiner und großer Stromstärken aufweisen. Hierbei sind in den Stromimpulspausen Meßphasen mit Entladeintervallen vergleichsweise kurzer Dauer eingeschaltet, wobei zu Beginn und im vorgegebenen zeitlichen Abstand nach Beginn der Abschnitte hoher Stromstärke jeweils die Batteriespannung gemessen und die Differenz der gemessenen Spannungswerte zur Steuerung des Ladevorganges verwendet wird. Während der Meßphasen wird der Innenwiderstand der Batterie unter unterschiedlichen Lade- und Entladezuständen gemessen, wobei diese inneren Widerstände zueinander in Beziehung gesetzt und auch mit in aufeinanderfolgenden Meßphasen ermittelten inneren Widerständen verglichen werden. Aus diesen Beziehungen kann eine Fülle von informationen über verschiedene Zustände der Batterie abgeleitet werden, mit deren Hilfe der Ladevorgang gesteuert und eine Aussage über den Brauchbarkeitszustand der Batterie gewonnen werden kann. Bei diesem bekannten Verfahren werden nicht die Absolutwerte von Spannungen, sondern die Spannungsänderungen an der Batterie herangezogen, die von Lade- und Belastungsvorgängen hervorgerufen werden.

Durch die DE-A1-3 806 865 ist ein Ladeverfahren für Batterien in verschlossener Ausführung bekannt geworden, bei welchem unabhängig von der angewendeten Kennlinie der zulässige Gasungsdruck nicht überschritten werden darf. Dies wird dadurch erreicht, daß nach Erreichen einer oberen, unterhalb der Gasungsspannung liegenden Grenzspannung der anfangs relativ hohe Ladestrom auf einen unteren Wert, beispielsweise in der Größenordnung der Erhaltungsladung, solange abgesenkt wird, bis die sinkende Batteriespannung einen unteren Grenzwert ereicht hat, wonach wiederum der volle, aber leicht abgesenkte Ladestrom zur Wirkung kommt. Dieses pulsierende Ladeverfahren wird so lange fortgesetzt, bis der abgesenkte Ladestrom eine bestimmte Ladezeit erreicht hat. Danach erfolgt ein Nachladen mit dem unteren Wert des Ladestroms für eine vorgegebene Ladezeit. Bei diesem bekannten Verfahren wird die Frequenz der Ladestromimpulse vom jeweiligen Ladezustand der Batterie bestimmt, wodurch sich entsprechend lange Ladezeiten ergeben.

Durch das deutsche Gebrauchsmuster G 90 10 972.4 (Pölz) ist ein Ladegerät für Batterien bekannt geworden, bei dem ein Meß - und Regelkreis vorgesehen ist, der eine Einrichtung zur Erfassung des momentanen Aufladezustandes und einen Sollwertgeber aufweist, der über einen Rechner nach Speichertabellen oder Algorithmen zu jedem erfaßten, dem Aufladezustand entsprechenden Meßwert einen Sollwert für die Ladestromstärke vorgibt. Hierbei ist der Ladestromregler als Impulsregler mit gegebenfalls einstellbaren Impuls- und Pausenzeiten ausgebildet, der die Impulsstromstärke nach den vorgegebenen Sollwerten regelt. Ferner sind für die von der Meßschaltung erfaßte Klemmenspannung der am Ladegerät angeschlossenen Batterie im Regelkreis wenigstens ein oberer und ein unterer Grenzwert vorgebbar, wobei eine Steuerlogik des Regelkreises den Aufladevorgang nach Erreichen des oberen Grenzwertes bis zum Absinken der Klemmenspannung auf den unteren Wert unterbricht. Ferner ist es durch diese Druckschrift bekannt, Anzeigeeinrichtungen für den momentanen Aufladezustand und für eine falsche Polung vorzusehen.

Durch die FR 2 203 198 (Westinghouse) ist es bekannt, eine Spannungsmessung innerhalb der Impulspausen durchzuführen, um den jeweiligen Ladezustand festzustellen. Hierbei wird der jeweilige Ladezustand nicht unmittelbar aus diesen Spannungswerten, sondern mittelbar durch Differenzbildung dieser Spannungswerte ermittelt, die durch die aufeinanderfolgenden Messungen am Ende jeder Ladestromimpulse gewonnen werden. Das Resultat dieser Messungen wird einem Rechner zugeführt, der veranlaßt, daß der Ladestrom entweder zugelassen, abgeschaltet oder verändert wird.

Die EP-O 181 112 (Christie) hat ein Ladeverfahren zum Gegenstand, bei dem der Batterie konstante Ladestromimpulse zugeführt werden , wobei die Klemmenspannung am Ende der Stromimpulspausen erfaßt wird. Hierbei kann das Absinken des elektrochemischen Potentials durch einen Entladevorgang in den Stromimpulspausen verstärkt werden. Bei diesem bekannten Verfahren wird ebenfalls ein Rechner eingesetzt, insbesondere um als Abschaltkriterium eine zeitabhängige Spannungsänderung zu erfassen bzw. zu errechnen.

Ferner ist es durch die FR-A-2 274 156 bekannt, im Ladungserhaltungsbetrieb die Batteriespannung zwischen einem oberen und einem unteren Grenzwert ansteigen und abfallen zu lassen. In ähnlicher Weise wird auch bei dem in der EP-0 330 981 beschriebenen Verfahren die Batteriespannung ab Erreichen einer oberen Spannungsgrenze zwischen dieser oberen Grenze und einer unteren Grenze gehalten.

Die EP 0 074 444 hat ein wiederaufladbares Batteriesystem zum Gegenstand, bei dem der Lade- und Entladevorgang in Abhängigkeit von der Säuredichte (pH-Wert), Temperatur u. dgl. mit Hilfe eines Mikroprozessors gesteuert wird. Hierbei werden konstante Lade- und Entladestromimpulse verwendet, wobei die Impulsgeschwindigkeit entsprechend der gewünschten Ladestromstärke veränderbar ist.

Die US 4,371,826 (Shelly) hat eine Ladeschaltung zum Gegenstand, bei der der Ladestrom der Batterie in Form von impulsbreitenmodulierten konstanten Stromimpulsen zugeführt wird.

Die PCT/AT 89/00027 (Wiespeiner) hat ein Verfahren, Geräte und Schaltungsvarianten zum Gegenstand, bei dem eine Abschaltung oder Reduktion der Energiezufuhr zur Verhinderung einer Überladung erfolgt, wobei als Kriterium für die Abschaltung der zeitliche Verlauf von Ladestrom und Ladespannung verwendet und mit Hilfe einer Rechenschaltung erfaßt und ausgewertet wird.

Die US 4, 710,694 (Sutphin) hat ein mikroprozeßgesteuertes Batterieladesystem zum Gegenstand, bei dem drei unterschiedlich hohe Ladeströme vorgesehen sind, die nacheinander zur Wirkung gebracht werden. Das Wirksamwerden dieser Ladeströme wird von einem Mikroprozessor in der Weise bestimmt, daß zuerst ein sehr hoher Ladestrom zumindest eine kurze Zeitperiode eingeschaltet wird, z.B. bis ein bestimmter Spannungswert erreicht ist, oder die Änderung der Klemmenspannung kleiner als x/100 Volt/h beträgt, wobei x eine positive Zeit sein soll; dann kommt der zweite Ladestrom zu Wirkung, der solange eingeschaltet bleibt, bis die Spannungsänderung einen Wert erreicht hat, der kleiner als x/100 Volt/h ist. Anschließend kommt der dritte Ladestrom zur Beendigung der Ladung zur Wirkung.

Durch die WO-A-84/00614 (Stubbe) ist ein Verfahren zum Überwachen der jeweils eingeladenen Kapazität von Akkumulatoren bekannt geworden, bei dem zwecks Schnelladung mehrere Ladephasen mit pulsierenden Ladeströmen unterschiedlicher Stärke vorgesehen sind. Hierbei wird in einer ersten Ladephase ein sehr hoher Ladestrom zugeführt, der ein vielfaches des normalen Ladestroms beträgt. Von der ersten Ladephase wird auf die zweite Ladephase dann umgeschaltet, wenn entweder eine bestimmte Umschaltspannung aufgebaut ist oder die Temperatur einen einstellbaren Wert überschreitet, und zwar je nachdem, welche von diesen Bedingungen zuerst eintritt. Die zweite Phase wird dann beendet, sobald eine gewählte Zeit verstrichen oder eine bestimmte Abschaltspannung erreicht oder eine bestimmte Temperatur der zu ladenden Baterie überschritten wird. Hierbei werden zur Ladeerhaltung nach Beendigung der zweiten Phase innerhalb einer dritten Ladephase in vergrößertem Zeitabstand Spannungserhaltungsimpulse zugeführt.

Der Erfindung liegt die Aufgabe zugrunde, ein neues Ladeverfahren zu schaffen, mit dem noch kürzere Ladezeiten erzielt und in einem noch größeren Temperaturbereich geladen werden kann, ohne daß eine schädliche Erwärmung und damit Neigung zum Gasen auftritt. Vor allem soll das Ladegerät universell für alle handelsüblichen Batterietypen und -größen anwendbar sein, insbesondere auch zur Schnelladung von Kraftfahrzeugbatterien.

Die vorliegende Erfindung geht ebenfalls von einem Ladevefahren aus, bei dem der Ladestrom der Batterie in Form von konstanten Stromimpulsen zugeführt wird, wobei in den Stromimpulspausen die jeweilige Klemmenspannung der Batterie gemessen und dadurch der jeweilige Ladezustand der Batterie erfaßt wird und beim Erreichen der maximalen Abschaltspannung der Ladestrom so verringert wird, daß keine unzulässige Erwärmung und/oder Gasung der Batterie auftritt, bei dem mehrere Ladeströme unterschiedlicher Stärke vorgesehen sind, die in Abhängigkeit vom jeweiligen Ladezustand der Batterie zur Wirkung gebracht werden und bei dem jeder Ladestromstärke ein batteriespezifischer Bereich im elektrochemischen Potentialverlauf der Batterie zugeordnet ist, derart, daß bei Überschreitung der oberen Bereichsgrenze eine Abschaltung des jeweiligen Ladestroms und gegebenenfalls eine Einschaltung des Ladestroms des sich anschließenden Bereichs erfolgt.

Das erfindungsgemässe Verfahren ist dadurch gekennzeichnet, daß der Ladestrom ab Erreichen einer oberen Bereichsgrenze (U1) in einer ersten Phase in einer Übergangsphase auf den niedrigeren Wert (I2) einer zweiten Phase (Phase 2) reduziert und bei erneutem Unterschreiten der oberen Bereichsgrenze (U1) der ersten Phase (Phase 1) wieder auf den höheren Wert (I1) der ersten Phase eingestellt wird, so daß der Ladestrom zwischen dem Stromwert (I1) der ersten Phase und jenem der zweiten Phase gehalten wird, bis das wegen des reduzierten Ladestroms sinkende elektrochemische Potential der Batterie nach Impulspausen auf eine untere Bereichsgrenze (U2a) der zweiten Phase angestiegen ist, wobei dann dieser Ladestrom in der zweiten Phase auf dem zweiten Stromwert (I2) gehalten wird, und wenn in dieser Phase die obere Bereichsgrenze (U2b) erreicht ist, wird der Ladestrom in einer Nachladephase (Phase 3) auf einen dritten Stromwert (I3) reduziert und durch Ein- und Ausschalten dieses Stroms innerhalb weiterer oberer und unterer Bereichsgrenzen des elektrochemischen Potentialverlaufs langsam reduziert.

Dies kann gemäss der Erfindung dadurch erreicht werden, daß der einem jeden Stromwert (Stromstärke) zugeordnete Bereich im elektrochemischen Potentialverlauf U=f(t) durch einen unteren und einen oberen Spannungs-Sollwert gekennzeichnet ist, wobei in den Ladephasen der untere Spannungs-Sollwert vorzugsweise dem oberen Spannungs-Sollwert des vorher durchlaufenden Bereichs entspricht, derart, daß nach jeder Über- oder Unterschreitung einer der Bereichsgrenzen des elektrochemischen Potentials der Batterie nach einem Stromimpuls der Stromwert (die Höhe) des oder der nachfolgenden Stromimpulse dem jeweilig zugeordneten Bereich angepaßt wird, daß beim Erreichen der obersten Bereichs grenze die nachfolgenden Stromimpulse solange unterdrückt (abgeschaltet) werden, bis die untere Bereichsgrenze der Nachladephase erreicht ist und daß in der Nachladephase nach jeder Über- oder Unterschreitung der Bereichsgrenzen nach einem Stromimpuls der oder die nachfolgenden Stromimpulse unterdrückt oder freigegeben werden.

Im Gegensatz zu den bekannten Ladeverfahren und -geräten, bei denen der Batterie von außen Ströme und Spannungen eingeprägt werden, werden bei dem Verfahren nach der Erfindung der Batterie unterschiedliche Spannungen und Ströme angeboten, aus denen sie selbst die auswählt, daß beim Durchlaufen dieses Bereiches es zu keiner nennenswerten Erwärmung und/oder Gasung kommt.

Gemäß einer weiteren Ausgestaltung der Erfindung, wird das beim Ladevorgang in jeder Stromimpulspause normalerweise auftretende Absinken des elektrochemischen Potentials bei einer noch nicht voll geladenen Batterie durch einen gezielten Entladevorgang in der Stromimpulspause verstärkt. Durch diese kurzzeitige Entladung innerhalb der Stromimpulspause wird sichergestellt, daß das tatsächliche elektrochemische Potential schneller erreicht wird. Darüberhinaus wird durch diese Maßnahme verhindert, daß sich ein batteriespezifischer Kristallaufbau in der Batterie bildet, der als sogenannter "Memory-Effekt" bekannt ist. Dieser Effekt setzt bekanntlich die Kapazität einer Batterie und ihre mögliche Zyklenzahl herab.

Es hat sich gezeigt, daß mit dem erfindungsgemäßen Verfahren die Ladedauer auf fünf bis sieben Minuten herabgesetzt werden kann. Darüberhinaus ist es auch bei Temperaturen zwischen -20°C und +80°C anwendbar.

Dadurch, daß in Bruchteilen von Sekunden geladen, gemessen und korrigiert wird, wird sehr schonend geladen, trotz des anfänglich sehr hohen Ladestromes. Es weist einen sehr hohen Wirkungsgrad auf, weil der Ladestrom voll von der Batterie aufgenommen und nicht in Wärme umgesetzt wird.

Um eine besonders schonende Ladung zu ermöglichen, kann die Anzahl der Bereiche beliebig erhöht werden und der Hochstrombereich nicht an die erste, sondern an zweiter oder anderer Stelle plaziert oder ganz weggelassen werden. Es ist daher besonders geeignet, wenn eine Batterie über eine Fotovoltaik geladen werden soll.

Selbstverständlich kann das erfindungsgemässe Verfahren auch zur Ladung von Batterie-Packs eingesetzt werden; es brauchen für diesen Einsatz nur die entsprechenden Parameter geändert bzw. angepasst werden.

Weitere Einzelheiten und Merkmale der Erfindung ergeben sich aus der nachfolgenden Beschreibung und aus den Unteransprüchen. Anhand der Zeichnung, in der mehrere Anwendungsbeispiele dargestellt sind, wird das erfindungsgemässe Verfahren näher erläutert. Es zeigen:
- Figur 1: den theoretischen Spannungs- und Stromverlauf beim Laden einer handelsüblichen, wiederaufladbaren NiCd-Batterie,
- Figur 2: ein Blockschaltbild einer Schaltungsanordnung zur Durchführung des erfindungsgemässen Verfahrens,
- Figur 3: den tatsächlichen Spannungs- und Stromverlauf bei 50°C Betriebstemperatur am Beginn der Ladung,
- Figur 4: den tatsächlichen Spannungs- und Stromverlauf bei 0°C Betriebstemperautr am Beginn der Ladung.

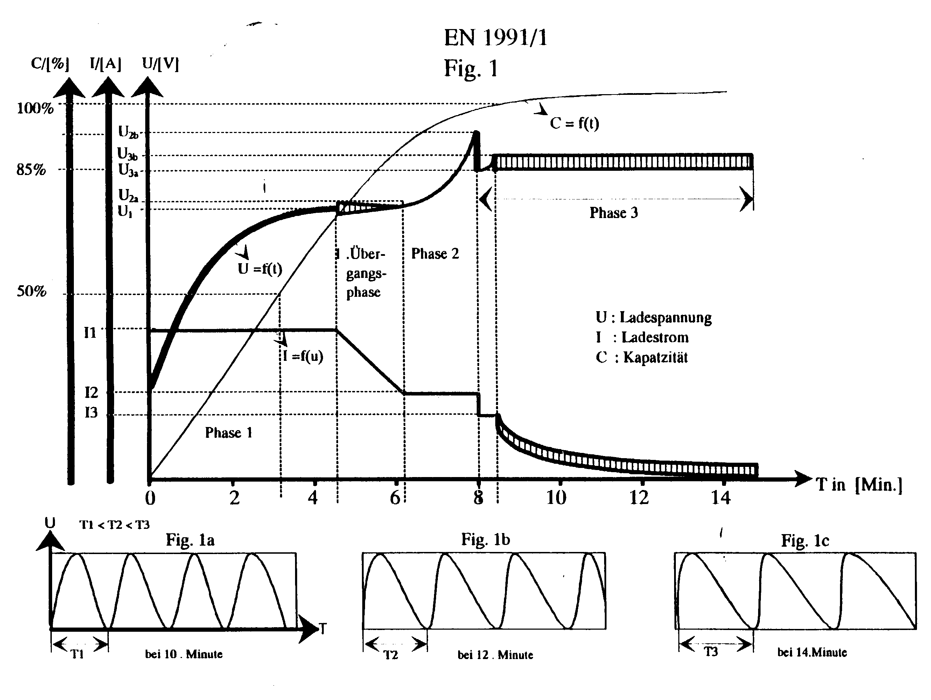

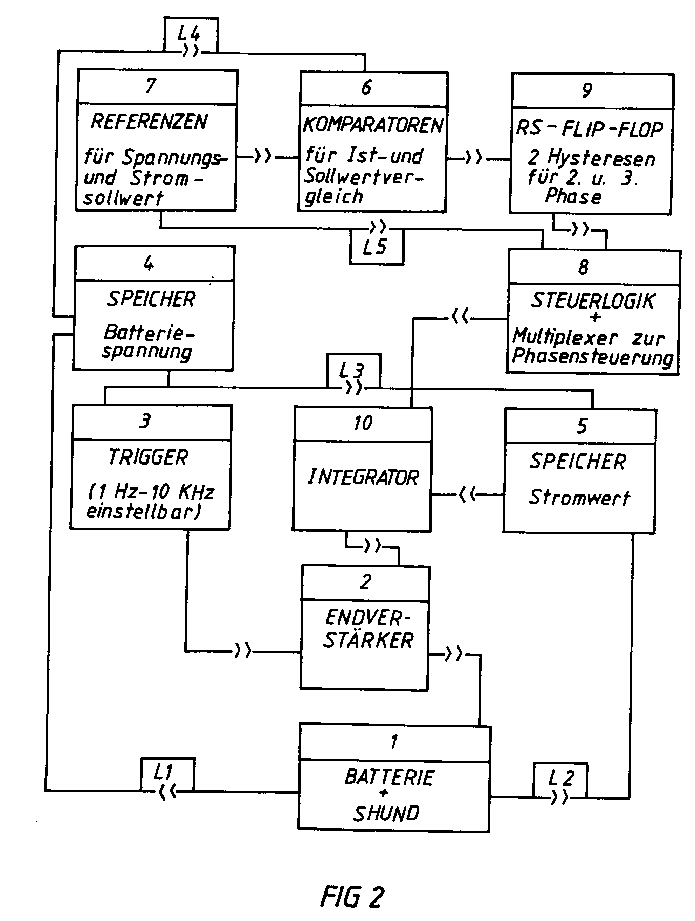

Figur 1 zeigt den typischen Ladeverlauf bei einer handelsüblichen Ni/CD-Batterie. Mit U = f (t) ist der elektrochemische Potentialverlauf (EMK) der Batterie und mit I = f (U) der getaktete Ladestrom bezeichnet. Wie zu ersehen ist, sind drei unterschiedlich hohe konstante Ladeströme I1, I2 und I3 vorgesehen. Die Wahl der Höhe der Ladeströme hängt von der zu ladenden Batterie ab. Dabei wird von der Tatsache Gebrauch gemacht, daß eine vollständig entladene Batterie zu Beginn der Ladung einen sehr hohen Strom aufnehmen kann. Maximal kann dieser in der Größenordnung des Kurzschlußstromes liegen. Bei dem gewählten Beispiel betragen die Ströme I1 = 10 A, I2 = 6A und I3 = 4A. Jedem dieser ströme ist ein batteriespezifischer Bereich (Phasen 1 bis 3) im elektrochemischen Potentialverlauf U = f (t) zugeordnet, wobei jeder Bereich durch ein unteres und ein oberes Potential gekennzeichnet ist. Der Bereich der Phase 1 geht praktisch von Null aus bei einer vollständig entladenen Batterie und endet beim Sollwert-Potential U1. An diesen schließt sich die Phase 2 an, mit dem unteren Sollwert-Potential U2a, das sich nur unwesentlich von U1 unterscheidet. Wie unten noch näher erläutert werden wird, vollzieht sich der übergang von Phase 1 nach Phase 2 meist nicht stetig, sondern in Schritten, so daß sich eine übergangsphase 1 bildet, in der sowohl der Strom I1 als auch der Strom I2 wechselweise zur Wirkung kommen. Dieses Verhalten wird anhand der Figur 2 noch näher erläutert.

Wie ersichtlich ist, endet beim gewählten Beispiel der Bereich der Phase 2 beim Erreichen des maximalen Spannungswertes U2b, wo der Strom I2 der Phase 2 abgeschaltet und der Strom I3 der Erhaltungsladung zur Wirkung gebracht wird. Dieser Bereich ist durch das untere Sollwert-Potential U3a und das obere Sollwert-Potential U3b gekennzeichnet. Die Erhaltungsladung setzt praktisch aber erst ein, wenn das gemessene Potential der Batterie - nach dem Abschalten des Stromes I2 - auf das Sollwert-Potential U3a der Phase 3 abgesunken ist; d.h., die Batterie war noch nicht voll durchgeladen. Sofern der Ladestrom I3 ausreicht, um auf das Sollwert-Potential U3b zu gelangen, wird der Ladestrom I3 abgeschaltet und wird wieder eingeschaltet, wenn das Potential der Batterie wieder auf das Sollwert-Potential U3a absinkt. Der gestrichelt gezeichnete Bereich in Phase 3 im Potentialverlauf U =f(t) bedeutet, daß der Strom I3 entsprechend der durch die Potentiale U3a und U3b gebildete Hysterese ein- und abgeschaltet wird. Wie Fig. 1a bis Fig. 1c zeigen, pendelt das Potential der Batterie zwischen den Werten U3a und U3b, wobei die Schaltperioden im Laufe der Ladezeit immer mehr zunehmen. Der gestrichelte Bereich im Stromverlauf I = f(U) zeigt, daß der Strom I3 der Erhaltungsladung mit zunehmender Ladedauer abnimmt, infolge der weiter unten erläuterten Impulsbreitensteuerung der Ladeimpulse des getakteten Ladestromes I3.

Sofern der Ladestrom I3 nicht ausreicht, um auf das Sollwert-Potential U3b zu gelangen, kann bei einer noch nicht voll durchgeladenen Batterie das Potential so weit absinken, daß das Sollwert-Potential U2a erreicht wird, was zur Folge hat, daß der Ladestrom I2 der Phase 2 wieder zur Wirkung kommt und die Batterie nun mit dem höheren Strom I2 geladen wird. Sobald das Sollwert-Potetential U2b wieder erreicht wird, wird-wie zuvor - auf Erhaltungsladung umgeschaltet. Dies kann sich mehrfach wiederholen. Auf diese Weise kann auch innerhalb der Phase 2 ein übergangsbereich entstehen.

Der übergangsbereich 1 entsteht, wenn im Zuge der Ladung das elektrochemische Potential nach Erreichen des Bereichendes der Phase 1, welches durch das Sollwert-Potential U1 gekennzeichnet ist, infolge unvollständiger Durchladung der Batterie wieder unter das Sollwert-Potential U1 fällt, was wiederum ein Wirksamwerden des Ladestromes I1 und eine Abschaltung des Ladestromes I2 zur Folge hat. Der höhere Ladestrom I1 hebt das Batteriepotential innerhalb der Impulsdauer wieder Uber das Sollwert-Potential U1, was wiederum eine Abschaltung des Ladestromes I1 und Einsetzen des Ladestroms 2 bewirkt. Wird in der folgenden Impulspause erneut festgestellt, daß das Potential U1 abgesunken ist, wiederholt sich der Vorgang. Dies setzt sich solange fort, bis das Batterie-Potential innerhalb der Impulspausen nicht mehr unter das Sollwert-Potential U1 fällt.

Innerhalb einer übergangsphase setzen sich die Ladestromimpulse immer aus zwei Stromstärken zusammen, so daß nach Mittelwertbildung der Ladestrom stetig abnimmt, wie die übergangsphase in Figur 1 zeigt.

Wenn z.B. eine nur teilweise entladene Batterie geladen werden soll, wird die Phase 1 Ubersprungen und gleich in die Phase 2 mit der Ladung begonnen. Wird, z.B. aus Versehen, eine vollgeladene Batterie in ein nach diesem Verfahren arbeitendes Gerät eingelegt, so werden die Phasen 1 und 2 in Bruchteilen einer Sekunde Ubersprungen und die Batterie kommt dann unmittelbar in die Haltephase 3.

Mit Hilfe von Leuchtdioden oder anderer optischer Anzeigen kann der Kapazitätszustand der Batterie relativ leicht dadurch angezeigt werden, daß die, die Bereiche kennzeichnenden Potential-Sollwerte U1, U2a, U3a, U3b und U2b zur Anzeige herangezogen werden.

Figur 2 zeigt ein Blockschaltbild einer Schaltungsanordnung zur Durchführung des in Figur 1 dargestellten Ladeverlaufs. Mit 1 ist eine Batterie bezeichnet, die geladen werden soll. Der von der Batterie angeforderte jeweilige Ladestrom wird dieser über einen Endverstärker 2 getaktet zugefUhrt, welcher von einem Trigger 3 angesteuert wird, so daß konstante Stromimpulse geliefert werden. Die Taktfrequenz wird hoch gewählt, damit die Batterie sehr schonend aufgeladen werden kann. Die Taktfrequenz kann zwischen 1 Hz und 10 kHz liegen und ist vorzugsweise einstellbar; einstellbar ist auch das Impuls-Pausenverhältnis der Taktfrequenz, z.B. zwischen 5 : 1 und 100 : 1, d.h. die Impulsdauer ist 5 bis 100 mal so lang wie die Impulspause. Wie bereits eingangs ausgeführt, wird in jeder Stromimpulspause das den Ladezustand repräsentierende elektrochemische Potential (EMK) der Batterie gemessen und Uber eine Leitung L1 laufend einem Batterie-Spannungsspeicher 4 als Spannungs-Istwert zugefUhrt. Es wird dort solange gespeichert, bis der nächste Messwert aus der folgenden Impulspause eintrifft. Der Speicher 4 wird also laufend auf den letzten Stand korrigiert.

In ähnlicher Weise wird der jeweilige Strom-Istwert Uber eine Leitung L2 einem Strom-Istwert-Speicher 5 zugeführt und dort solange gespeichert, bis der nächste Strom-Istwert der nächsten stromführenden Phase eintritt. Zur Erfassung des Strom-Istwertes dient ein Shunt, an dem eine dem Strom proportionale Spannung abgegriffen wird, die als Spannungswert dem Strom-Istwert-Speicher 5 zugeführt wird. Damit der Spannungs-Istwert-Speicher 4 und der Strom-Istwert-Speicher 5 zusammen mit dem Endverstärker 2 synchron laufen, werden die beiden Speicher 4 und 5 wechselweise Uber Leitung L3 vom Trigger 3 angesteuert, u.zw. der eine in der Impulspause und der andere in der dort stromführenden Phase. über eine Leitung L4 wird der in dem Spannungs-Istwert-Speicher 4 abgelegte Spannungs-Istwert Komparatoren 6 zum Sollwert-Istwert-Vergleich zugeführt. Die für das Verfahren benötigten Spannungs- und Strom-Sollwerte sind in dem Kästchen 7 enthalten.

Die in Form von Spannungen vorliegenden Strom- und Spannungs-Sollwerte werden vorzugsweise in einfacher Weise mit Hilfe von mit konstanten Spannungen versorgten Spannungsteilern gewonnen.

Die Spannungs-Sollwerte werden den Komparatoren 6 zugeleitet, wobei die Zahl der Komparatoren der Zahl der zu erfassenden Potentiale entspricht. Der Spannungs-Istwert wird allen Komparatoren angeboten. Die Ausgänge der einzelnen Komparatoren werden einer RS-Flip-Flop-Kombination 9 zugefUhrt, die die einzelnen Bereiche (Phasen 1 bis 3) festlegt, derart, daß die beiden Hysteresen 2 und 3 gebildet werden.

Entsprechend dem in Figur 1 dargestellten Beispiel wird die eine Hysterese 2 durch die beiden Sollwert-Potentiale U2a und U2b und die andere Hysterese 3 durch die Spannungs-Sollwerte U3a und U3b gebildet, derart, daß beim Anstieg des elektrochemischen Potentials der Batterie von U2a bzw. U3a nach U2b bzw. U3b der zugeordnete Ladestrom I2 bzw. I3 eingeschaltet, hingegen beim Absinken des Batterie-Potentials von U2b bzw. U3b nach U2a bzw. U3a der diesem Bereich (Phase 2 bzw. Phase 3) zugeordnete Strom I2 bzw. I3 abgeschaltet bleibt.

Die den einzelnen Phasen zugeordneten Strom-Sollwerte werden über eine Leitung L5 einer Steuerlogik 8 Ubermittelt. Die Flip-Flops der RS-Kombination 9 geben vorzugsweise digitale Signale an die Steuerlogik 8,um dieser mitzuteilen, in welcher Phase man sich gerade befindet. Die Steuerlogik 8 enthält einen Multiplexer zur Phasensteuerung, um eine entsprechende Verknüpfung zwischen den Phasen 2 und 3 mit den ihnen zugeordneten Ladeströmen I2 und I3 herzustellen. Am Ausgang der Steuerlogik 8 erscheint somit der von der Batterie angeforderte Strom-Sollwert, der einem Integrator 10 zugefUhrt wird. Der Integrator 10 vergleicht und korrigiert den von der Steuerlogik bereitgestellten Strom-Sollwert mit dem im Strom-Istwert-Speicher 5 eingespeicherten Strom-Istwert.

Der Integrator 10 steuert über den vorzugsweisen mehrstufigen Endverstärker die von der Batterie angeforderten maximal zulässigen Ladeströme. Da der Endverstärker 2 vom Trigger 3 vorzugsweise Uber eine Vorverstärkerstufe getaktet wird, ergeben sich exakte Stromimpulse, die sich in den übergangsphasen aus zwei Stromstärken zusammensetzen, z.B. in der übergangsphase 1 aus den Strömen I1 und I2, wobei die Impulsdauer konstant bleibt.

Die Anpassung eines nach diesen Verfahren arbeitenden Ladegerätes an verschiedene Batterie-Typen ist in einfacher Weise praktisch nur durch Einstellung von Potentiometern oder dgl. möglich. Es kann also mit Recht als "Elektrodenspezifisches Ladeverfahren" bezeichnet werden.

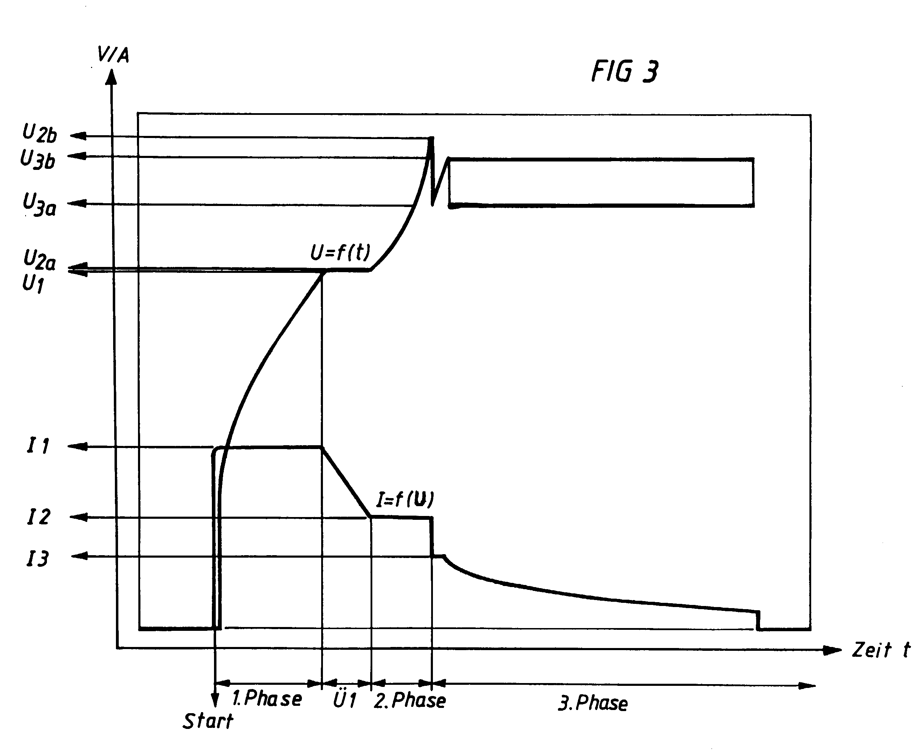

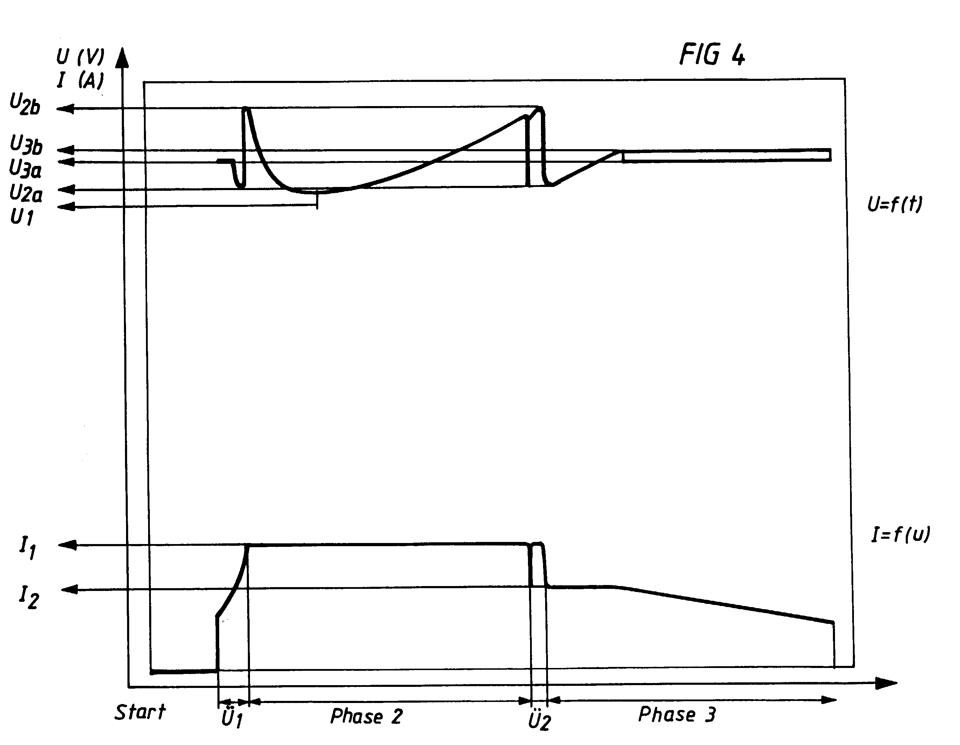

Figur 3 und Figur 4 zeigen tatsächlich aufgenommene Strom-Spannungs-Diagramme, wobei die Strom- und Spannungskurven U = f(t) und I = f(U) bei einer Batterietemperatur von 50°C bzw. 0°C aufgenommen wurden. Die Höhe der Ladeströme I1 bis I3 und die Höhe der Spannungs-Sollwerte U1, U2a, U2B, U3a und U3b sind gleich gewählt wie in Figur 1. Wie zu ersehen ist, entspricht der Kurvenverlauf in Figur 3 praktisch dem in Figur 1, mit Ausnahme der Ladezeiten, die in Figur 3 zwischen 5 und 7 Minuten liegen.

Durch die Tiefe der Temperatur bedingt, nimmt die Batterie wenig Strom auf, wie Figur 4 zeigt, so daß die Phase 1 nach einer kurzen übergangsphase ü1 sofort in die Phase 2 mit dem Ladestrom I2 Ubergeht. Da nach Erreichen des maximalen Spannungs-Sollwertes U2b der Ladestrom I3 der Erhaltungsladung nicht ausreichend war, um das Potential U3a zu halten, wurde nochmals der Ladestrom I2 eingeschaltet. Auf diese Weise entstand die übergangsphase ü2. überraschend und unerwartet hat sich herausgestellt, daß sich beim Einlegen einer alkalischen Primärzelle in ein nach dem erfindungsgemässen Verfahren arbeitendes Gerät, auch diese sich als gefahrlos wiederaufladbar erweist. Nähere Untersuchungen dieses Phänomens haben ergeben, daß beispielsweise eine als unaufladbar deklarierte Alkali-Mangan-Primärzelle 50 mal hintereinander aufgeladen und entladen wurde und nach der 50. Periode immer noch 75% ihrer Nennkapazität hatte. Allerdings war eine Schnelladung nicht möglich; die Ladezeit betrug zwischen 2 und 3 Stunden. Versuche haben ergeben, daß diese Eigenschaft der Wiederaufladbarkeit auch Quecksilber-Quecksilberoxid- und Silber-Silberoxid-Primärzellen und andere aufwiesen. Selbstverständlich war dazu eine batteriespezifische Einstellung des Ladegeräts erforderlich.

Der bei dem erfindungsgemässen Verfahren etwa höhere schaltungstechnische Aufwand des Ladegeräts gegenUber den bekannten Schnelladegeräten, kann durch eine sinnvolle Integration von elektronischen Bauteilen und Baugruppen zu einem IC in Grenzen gehalten werden. Er ist aber stets dort gerechtfertigt, wo eine extrem kurze Ladezeit, schonende Behandlung der Batterie, erhöhte Zyklenzahl, Verhinderung und gegebenenfalls Behebung von Memory-Verhalten gefragt sind.

Ein Schutz gegen falsches Einlegen einer Batterie ins Ladegerät (Verpolungsschutz), kann dadurch leicht realilisert werden, daß in die Zuleitung zur Spannungs- und Stromversorgung des Gerätes ein Schalttransistor angeordnet ist, der nur bei richtiger Polung der Batterie aufgesteuert wird. Bekanntlich hat auch eine vollständig entladene Batterie noch ein elektrochemisches Restpotential von etwa 0,6 Volt, das nach entsprechender Verstärkung ausreicht, um den Schalttransistor im Eingangskreis aufzusteuern. Da eine stark fehlerhafte Batterie, z.B. infolge eines Kurzschlußes zwischen den Elektroden der Batterie, kein Restpotential mehr hat, wird eine solche von dem zuvor beschriebenen Verpolungsschutz ebenfalls erkannt und kann angezeigt werden. Der Ladevorgang wird dann gar nicht eingeleitet.

Schließlich kann eine zusätzliche Einrichtung vorgesehen sein, z.B. Sensoren, um die Temperatur der Batterie zu überwachen, was allerdings nur dann sinnvoll ist, wenn eine Batterie bei erhöhter Temperatur, z.B. über 60°C, geladen werden soll.

## Patentansprüche

1. Verfahren zum vorzugsweise schnellen Laden von wiederaufladbaren Batterien, insbesondere von Kraftfahrzeugen, bei dem der Ladestrom der Batterie in Form von konstanten Stromimpulsen zugeführt wird, wobei in den Stromimpulspausen die jeweilige Klemmenspannung der Batterie gemessen und dadurch der jeweilige Ladezustand der Batterie erfaßt wird und bei Erreichung der maximalen Abschaltspannung der Ladestrom so verringert wird, daß keine unzulässige Erwärmung und/oder Gasung der Batterie auftritt, bei dem mehrere Ladeströme unterschiedlicher Stärke vorgesehen sind, die in Abhängigkeit von dem jeweiligen Ladezustand der Batterie zur Wirkung gebracht werden und bei dem jedem Ladestrom ein batteriespezifischer Bereich. im elektrochemischen Potentialverlauf U=f (t) der Batterie zugeordnet ist, derart, daß bei Überschreitung der oberen Bereichsgrenze eine Abschaltung des jeweiligen Ladestroms und gegebenenfalls eine Einschaltung des Ladestroms des sich anschließenden Bereichs erfolgt, **dadurch** **gekennzeichnet**, daß der Ladestrom ab Erreichen einer oberen Bereichsgrenze (U1) in einer ersten Phase in einer Übergangsphase (Ü1) auf den niedrigeren Wert (I2) einer zweiten Phase (Phase 2) reduziert und bei erneutem Unterschreiten der oberen Bereichsgrenze (U1) der ersten Phase (Phase 1) wieder auf den höheren Wert (I1) der ersten Phase eingestellt wird, so daß der Ladestrom zwischen dem Stromwert (I1) der ersten Phase und jenem der zweiten Phase gehalten wird, bis das wegen des reduzierten Ladestromes sinkende elektrochemische Potential der Batterie nach Impulspausen auf eine untere Bereichsgrenze (U2a) der zweiten Phase angestiegen ist, wobei dann dieser Ladestrom in der zweiten Phase auf dem zweiten Stromwert (I2) gehalten wird, und wenn in dieser Phase die obere Bereichsgrenze (U2b) erreicht ist, wird der Ladestrom in einer Nachladephase (Phase 3) auf einen dritten Stromwert (I3) reduziert und durch Ein- und Ausschalten dieses Stromes innerhalb weiterer oberer und unterer Bereichsgrenzen des elektrochemischen Potentialverlaufs langsam reduziert.

2. Verfahren nach Anspruch 1, **dadurch** **gekennzeichnet**, daß der einem jeden Stromwert (I1, I2, I3) zugeordnete Bereich im elektrochemischen Potentialverlauf U=f(t) durch einen unteren und einen oberen Spannungs-Sollwert (O-Ul, U2a-U2b, U3a-U3b) gekennzeichnet ist, wobei in den Ladephasen der untere Spannungs-Sollwert (U2a) vorzugsweise dem oberen Spannungs-Sollwert (U1) des vorher durchlaufenen Bereichs entspricht, derart, daß nach jeder Über- oder Unterschreitung einer der Bereichsgrenzen (U1, U2) des elektrochemischen Potentials der Batterie nach einem Stromimpuls der Stromwert des oder der nachfolgenden Stromimpulse dem jeweilig zugeordneten Bereich (Phase 1 oder 2) angepaßt wird, daß beim Erreichen der obersten Bereichsgrenze (U2b) die nachfolgenden Stromimpulse so lange unterdrückt werden, bis die untere Bereichsgrenze (U3a) der Nachladephase (Phase 3) erreicht ist und daß in der Nachladephase (Phase 3) nach jeder Über- oder Unterschreitung der Bereichsgrenzen (U3a, U3b) nach einem Stromimpuls der oder die nachfolgenden Stromimpulse unterdrückt oder freigegeben werden.

3. Verfahren nach den Ansprüchen 1 bis 2, **dadurch gekennzeichnet**, daß das beim Ladevorgang in jeder Stromimpulspause normalerweise auftretende Absinken des elektrochemischen Potentials bei einer noch nicht vollgeladenen Batterie durch einen gezielten Entladevorgang in der Stromimpulspause verstärkt wird.

4. Verfahren nach Anspruch 3, **dadurch gekennzeichnet**, daß der Entladevorgang in den Stromimpulspausen durch Einschaltung eines Ohmschen Widerstandes - vorzugsweise in der Größenordnung von 10 bis 10.000 Ohm - verstärkt wird.

5. Verfahren nach den Ansprüchen 1 bis 4, **dadurch gekennzeichnet**, daß das Impulspausenverhältnis vorzugsweise zwischen 5 : 1 und 100 : 1 wählbar ist.

6. Verfahren nach den Ansprüchen 1 bis 5, **dadurch gekennzeichnet**, daß die Stromstärke des ersten Ladestroms vorzugsweise bis zur Größenordnung des Kurzschlußstroms der Batterie gewählt wird.

7. Schaltungsanordnung zur Durchführung des Verfahrens nach einem oder mehreren der Ansprüche 1 bis 6, **dadurch gekennzeichnet**, daß in jeder Stromimpulspause das elekrochemische Potential (EMK) der Batterie (1) an den Elektroden der Batterie (1) gemessen, in einem Spannungs-Istwert-speicher (4) eingespeichert und über Komparatoren (6) mit den den einzelnen Bereichen (Phasen 1 bis 3) zugeordneten Spannungs-Sollwerten (U1, U2a, U2b, U3a, U3b) verglichen wird, daß die Ausgänge der Komparatoren (6) mit einer RS-Flip-Flop-Kombination (9) verbunden sind, welche den jeweiligen Spannungs-Istwert, dem der ersten Phase (Phase 1) entsprechenden Potentialbereich zuordnet, wenn die Spannung kleiner als die obere Bereichsgrenze dieses Bereichs ist, und dem Potentialbereich der zweiten Phase (Phase 2) zuordnet, wenn die Spannung höher als die untere Bereichsgrenze (U2a) der zweiten Phase ist, sowie einer Steuerlogik (8) mitteilt, in welcher Phase sich die Ladung befindet und daß über eine Phasensteuerung der Steuerlogik (8) die einzelnen Bereiche (Phasen 1 bis 3) mit den zugeordneten hohen, mittleren oder niedrigen Strom-Sollwerten (I1 bis I3) verknüpft werden, derart, daß am Ausgang der Steuerlogik (8) ein dem Spannungs-Istwert entsprechender Strom-Sollwert erscheint, wobei in der Übergangsphase zwischen erster und zweiter Phase der niedrige Stromwert (I2) gewählt wird, wenn die Spannung größer als die obere Bereichsgrenze (U1) der ersten Phase (Phase 1) ist.

8. Schaltungsanordnung nach Anspruch 7, **dadurch gekennzeichnet**, daß der von der Steuerlogik (8) gelieferte, dem Spannungs-Istwert entsprechende Strom-Sollwert einem die Batterie speisenden Endverstärker (2) über einen Integrator (10) zugeführt wird, welcher den Strom-Istwert mit dem jeweiligen Strom-Sollwert vergleicht und diesen innerhalb der Impulsdauer nachstellt.

9. Schaltungsanordnung nach Anspruch 7 und 8, **dadurch gekennzeichnet,** daß der Strom-Istwert des getakteten Ladestroms mit Hilfe eines Shunts innerhalb der Impulsdauer gemessen und in einen Strom-Istwert-Speicher (5) für die Dauer der Impulsdauer eingespeichert wird.

10. Schaltungsanordnung nach Anspruch 7 bis 9, **dadurch gekennzeichnet,** daß der die unterschiedlich hohen Ladeströme. (I1 bis I3) liefernde, vorzugsweise mehrstufig ausgelegte Endverstärker (2) gemeinsam mit dem Spannung-Istwertspeicher (4) und dem Strom-Sollwert-Speicher (5) von einem Trigger (3) getaktet wird.

11. Schaltungsanordung nach den Ansprüchen 7 - 10, dadurch gekennzeichnet, daß die Spannungs- und Strom-Sollwerte an Spannungsteilern (7) abgegriffen werden, die von konstanten Spannungsquellen gespeist sind.

## Claims

1. Method for the preferably quick charge of rechargeable batteries, above all those of motor vehicles, at which the charging current of the battery is supplied in the form of constant current pulses, the respective terminal voltage of the battery being measured in the current pulse pauses and the respective charging state of the battery being thus acquired and the charging current being reduced as to prevent inadmissible heating and / or gassing of the battery after the maximum cutout voltage has been reached; at which several charging currents of different intensities, which are applied depending on the respective charging state of the battery, are intended and at which a battery specific area in the electrochemical potential difference U = f of the battery is assigned to each charging current so that the respective charging current will be cut out while the charging current of the adjacent area will, if necessary, be switched on as soon as the upper limit of the area is exceeded. The method **is characterized** by the facts that the charging current will, in a transition stage, be reduced to the lower value (I2) of a second stage (Stage 2) as soon as an upper limit ofthe area (U1) has been reached in a first stage and that it will be re-adjusted to the higher value (I1) of the first stage after the upper limit of the area (I1) has been exceeded again so that the charging current is kept between the current value (I1) of the first stage and that of the second stage until the electrochemical potential of the battery sinking due to the reduced charging current has, after pulse pauses, been increased to a lower limit of the area (U2a) of the second stage, this charging current being kept on the second current value (I2) in the second stage, and if the upper limit of the area (U2b) is reached in this stage, the charging current will be reduced to a third current value (I3) in a post-charging stage (Stage 3) and will be slowly reduced within further upper and lower limits of the area of the electrochemical potential difference by being switched on and off.

2. Method according to Claim 1, which is **characterized** by the fact that the area assigned to each current value (I1, I2, I3) is, in the electrochemical potential difference U = f (t), characterized by a lower and an upper voltage demand value (O-U1, U2a-U2b, U3a-U3b), the charging stages seeing a lower voltage demand value (U2a) that preferably corresponds to the upper voltage demand value (U1) of the preceding area so that the current value of the subsequent current pulse or pulses will, after any exceeding of the upper or lower limit of the area (U1, U2) of the electrochemical potential of the battery after a current pulse, be adapted to the respectively assigned area (Stage 1 or 2) so that the subsequent current pulses will, after the reaching of the highest limit of the area (U2b), be suppressed until the lower limit of the area (U3a) of the post-charging stage (Stage 3) is reached and so that the subsequent current pulse or pulses will, after any exceeding of the upper or lower limit of the area (U3a, U3b) after a current pulse, be suppressed or released.

3. Method according to Claims 1 to 2, which is **characterized** by the fact that the decrease of the electrochemical potential normally occurring in each current pulse pause at a battery that has not been fully loaded yet is intensified by a discharging process in the current pulse pause.

4. Method according to Claim 3, which is **characterized** by the discharging process in the current pulse pauses being intensified by switching on an Ohmic Resistance - preferably between 10 and 10 000 ohm.

5. Method according to Claims 1 to 4, which is **characterized** by the fact that the ratio of the pulse pauses can preferably be selected between 5 : 1 and 100 : 1.

6. Method according to Claims 1 to 5, which is **characterized** by the intensity of current of the first charging current being preferably selected up to that of the short circuit current of the battery.

7. Circuitry for the execution of the method according to one or several of Claims 1 to 6,which is **characterized** by the facts that the electrochemical potential (EMK) ofthe battery (1) is measured on the electrodes ofthe battery (1) in the current pulse pauses, stored in a voltage actual value store (4) and compared to the voltage demand values (U1, U2a, U2b, U3a, U3b) assigned to individual areas (Stages 1 to 3) by means of comparators, that the outputs ofthe comparators (6) are connected to an RS Flip Flop Combination (9), which will assign the respective voltage actual value to the potential area corresponding to the first stage (Stage 1) if the voltage is smaller than the upper limit of this area and will assign the respective voltage actual value to the potential area of the second stage (Stage 2) if the voltage is bigger than the lower limit of the area (U2a) and will communicate to a control logic (8) which stage the charge is in and so that the individual areas (Stages 1 to 3) will, by means of a stage control of the control logic, be linked with the assigned high, medium or low current values (I1 to 13) in a way that a current demand value corresponding to the voltage actual value will appear at the output of the control logic (8), the low current value (I2) being selected in the transition period between the first and second stages if the voltage is bigger than the upper limit of the area (U1) of the first stage (Stage 1).

8. Circuitry according to Claim 7, which is **characterized** by the current demand value supplied by the control logic (8) and corresponding to the voltage actual value being fed into a final amplifier (2) via an integrator (10), which compares the current actual value to the respective current demand value and re-adjusts it within the pulse period.

9. Circuitry according to Claims 7 and 8, which is **characterized** by the current actual value ofthe clocked charging current being measured by means of a shunt within the pulse period and stored in a current actual value store (5) within the pulse period.

10. Circuitry according to Claims 7 to 9, which is **characterized** by the final amplifier (2), which delivers the charging currents with their different intensities (I1 to I3) and is preferably designed in various steps, being clocked together with the voltage actual value store (4) and the current demand value store (5) by a tripper (3).

11. Circuitry according to Claims 7 - 10, which is **characterized** by the voltage and current demand values being sensed on voltage distributors fed by constant voltage sources.

## Revendications

1. Procédé pour la charge de préférence rapide de batteries rechargeables, en particulier de celles de véhicules à moteur lors duquel le courant de charge est amené sous forme d'impulsions de courant constant, la tension aux bornes respective étant mesurée pendant les intervalles entre les impulsions de courant et l'état de charge respectif étant ainsi acquis et le courant de charge étant réduit afin d'éviter un chauffage et / ou une gasification inadmissibles après que le courant de coupure maximal a été achevé; lors duquel plusieurs courants de charge d'une intensité différente sont prévus, ces courants de charge étant utilisés selon les états de charge respectifs, et lors duquel un domaine spécifique pour la batterie est attribué à chaque courant de charge selon la différence de courant U = f(t) de sorte qu'il y ait une coupure du courant de charge respectif et, si nécessaire, la mise en circuit du courant de charge du domaine adjacent lorsque la limite de domaine supérieure a été excédée. Ce procédé **est caractérisé** par les faits que le courant de charge sera réduit à une valeur inférieure (I2) d'une deuxième étape (Etape 2) dans une étape de transition dès qu'une limite de domaine supérieur (U1) a été achevée dans une première étape et que le courant de charge sera rajusté à la valeur supérieure (I1) de la première étape (Etape 1) lorsque la limite de domaine supérieure (U1) a été excédée de nouveau de sorte que le courant de charge soit maintenu entre la valeur de courant (I1) de la première étape et celle de la deuxième étape jusqu'à ce que le potentiel électrochimique de la batterie diminuant à cause du courant de charge réduit ait, après des intervalles entre les impulsions, augmenté à une limite de domaine inférieure (U2a) de la deuxième étape, ce courant de charge étant maintenu à la deuxième valeur de courant (I2) dans la deuxième étape, et lorsque la limite de domaine (U2b) est achevée dans cette étape, le courant de charge sera lentement réduit dans une étape de recharge (Etape 3) en coupant et connectant ce circuit dans d'autres limites de domaine supérieures et inférieures de la différence de potentiel électrochimique.

2. Procédé selon la Spécification 1 qui est **caractérisé** par le fait que le domaine attribué à chaque valeur de courant (I1, I2, I3) est, selon la différence de courant électrochimique U = f (t), caractérisé par une valeur prescrite de tension supérieure et inférieur (O - U1, U2a -U2b, U3a - U3b), la valeur prescrite de tension inférieure (U2a) correspondant de préférence à la valeur prescrite de tension supérieure (U1) du domaine précédent de sorte que la valeur de courant de l'impulsions de courant suivante ou des impulsion de courant suivantes soit adaptée au domaine respectivement attribué (Etape 1 ou 2) après qu'une limite de domaine du potentiel électrochimique de la batterie (U1, U2) a été violée de sorte que les impulsions de courant suivantes soient, après l'achèvement de la limite de domaine la plus élevée (U2b), supprimées jusqu'à ce que la limite de domaine inférieure (U3a) de l'étape de recharge (Etape 3) soit achevée et de sorte que l'impulsion (les impulsions) de courant suivante(s) soit (soient) supprimée(s) ou relâchée(s) après chaque violation des limites de domaine (U3a, U3b).

3. Procédé selon les Spécifications 1 à 2 qui est **caractérisé** par le fait que la diminution du potentiel électrochimique se produisant normalement dans chaque intervalle entre les impulsions de courant pour une batterie qui n'a pas encore été complètement chargée est renforcée par un processus de décharge pendant l'intervalle entre les impulsions de courant.

4. Procédé selon la Spécification 3 qui est **caractérisé** par le fait que le processus de décharge dans les intervalles entre les impulsions de courant est renforcé par la connexion d'une résistance ohmique - de préférence entre 10 et 10 000 ohm.

5. Procédé selon les Spécifications 1 à 4 qui est **caractérisé** par le fait que le rapport des intervalles entre les impulsions peut, de préférence, être choisi entre 5 : 1 et 100:1.

6. Procédé selon les Spécifications 1 à 5 qui est **caractérisé** par le fait que l'intensité du premier courant de charge est, de préférence, choisie jusqu'à celle du courant de court-circuit.

7. Couplage pour l'exécution du procédé selon une ou plusieurs des Spécifications 1 à 6 qui est **caractérisé** par les faits que le potentiel électrochimique (EMK) de la batterie (1) est, pendant chaque intervalle entre les impulsions de courant, mesuré aux électrodes de la batterie (1), mémorisé dans une mémoire de valeurs effectives de tension (4) et comparé aux valeurs prescrites de tension (U1, U2a, U3a, U3b) attribuées aux domaines individuels (Etapes 1 à 3) à l'aide de comparateurs (6) de sorte que les sorties des comparateurs (6) soient raccordées à une «Combinaison RS-Flip-Flop» (9) qui attribuera la valeur effective de tension respective au domaine de potentiel correspondant àla première étape (Etape 1) si la tension est inférieure à la limite de domaine supérieure et attribuera cette valeur à la deuxième étape (Etape 2) si la tension est supérieure à la limite de domaine inférieure (U2a) et communiquera à la logique de commande (8) dans quelle étape se trouve la charge et de sorte que les domaines individuels (Etapes 1 à 3) soient, par voie d'une commande d'étapes de la logique de commande (8), liés aux valeurs prescrites de courant supérieures, moyennes et inférieures (I1 à I3) de sorte qu'une valeur prescrite de courant correspondant à la valeur effective de tension apparaisse à la sortie de la logique de commande (8), la valeur de courant inférieure (I2) étant choisie dans l'étape de transition entre la première et la deuxième étape si la tension est supérieure à la limite de domaine supérieure (U1) de la première étape (Etape 1).

8. Couplage selon la Spécification 7 qui est **caractérisé** par le fait que la valeur prescrite de tension livrée par la logique de commande (8) et correspondant à la valeur effective de courant est amenée par un amplificateur terminal (2) par voie d'un intégrateur (10) qui compare la valeur effective de courant à la valeur prescrite de courant respective et la rajustera pendant la durée de l'impulsion.

9. Couplage selon les Spécifications 7 et 8 qui est **caractérisé** par le fait que la valeur effective de courant du courant de charge synchronisé est mesuré à l'aide d'un shunt pendant la période de l'impulsion et mémorisé dans une mémoire de valeurs effectives de courant (5) pour la durée de l'impulsion.

10. Couplage selon les Spécifications 7 à 9 qui est **caractérisé** par le fait que l'amplificateur terminal qui livre les courants de charge d'une intensité différente et est, de préférence, conçu à plusieurs étages (2) est synchronisé ensemble avec la mémoire de valeurs effectives de tension (4) et la mémoire de valeurs prescrites de courant (5) par un culbuteur (3).

11. Couplage selon les Spécifications 7 - 10 qui est **caractérisé** par le fait que les valeurs prescrites de tension et de courant sont prélevées aux diviseurs de tension (7) qui sont alimentés par des sources de tension constante.
